# EUROPEAN PATENT SPECIFICATION

(11) **EP 3 742 318 B1**
(45) Date of publication and mention of the grant of the patent: **17.03.2021**
(21) Application number: 19177499.1
(22) Date of filing: 30.05.2019
(51) Int. Cl.: G06F 21/60, G06F 21/62, H04L 9/32, H04L 29/06

(54) **METHOD AND DEVICE FOR THE STORING, INSPECTION CONTROL AND RETRIEVAL OF DATA FROM A PERMANENTLY IMMUTABLE, DISTRIBUTED AND DECENTRALIZED STORAGE**
VERFAHREN UND VORRICHTUNG ZUR SPEICHERUNG, INSPEKTION UND ABRUF VON DATEN VON EINEM DAUERHAFT UNVERÄNDERLICHEN, VERTEILTEN UND DEZENTRALEN SPEICHER
PROCÉDÉ ET DISPOSITIF POUR LE STOCKAGE, L'INSPECTION, LE CONTRÔLE ET LA RÉCUPÉRATION DE DONNÉES D'UN STOCKAGE IRRÉMÉDIABLEMENT IMMUABLE, DISTRIBUÉ ET DÉCENTRALISÉ

(30) Priority: 22.05.2019 SI 201900098
(43) Date of publication of application: 25.11.2020
(73) Proprietor: Univerza v Mariboru, 2000 Maribor (SI)
(72) Inventor: TURKANOVIC, Muhamed, 2000 Maribor (SI); KEZMAH, Bostjan, 2000 Maribor (SI); PODGORELEC, Blaz, 2270 Ormo (SI); KAMISALIC LATIFIC, Aida, 2000 Maribor (SI); HERICKO, Marjana, 2000 Maribor (SI); HERICKO, Marjan, 2000 Maribor (SI)
(74) Representative: Jersan, Tatjana

(56) References cited:
- EP-A1- 3 477 527
- US-A1- 2005 043 964
- US-A1- 2016 359 819
- US-A1- 2018 307 859

## Description

### Technical problem

There are many options for storing data in a digital form. In most cases, the storing is performed within a private digital storage, a database, that allows for subsequent editing or deleting of data. Access to the storage and data management is enabled only to the entity that owns the database, or any other entity which is authorized by the storage owner or database manager to manage the data.

In some cases, private distributed databases are used. Such a database is distributed between several different nodes, where each node stores a part or a copy of the entire database. In this case, any kind of changes to the data in a particular node are eventually replicated to all other nodes that are part of the distributed database. In this way, the integrity of the storage is guaranteed despite its distribution.

Regardless of the distribution, in some cases, there is a requirement for a publicly available/accessible digital storage. When personal data is kept in a storage for which public access is not permitted, then such storage must be protected in such a way that an unauthorized access is not permitted, which, by default, public digital storages do not restrict. In such cases, the data can be protected using cryptographic methods that ensure data unreadability even though data is publicly available.

A special category of databases are permanently immutable, distributed and decentralized storages. An example of such are data storages based on blockchain technology. These databases distribute the data among all database nodes. Each node has a copy of the entire storage. As a result, the database is not under centralized control from one entity. Instead, the control is divided evenly between all nodes.

Immutable distributed and decentralized storages do not comply with the rules on personal data processing, in particular with the EU General Data Protection Regulation 2016/679, defined by the EU Parliament of Council on April 27^{th} 2016, on the data protection and privacy for all individual citizens of the EU with regard to the processing of personal data and on the export of such data, as well as with the repeal of the Directive 95/46 / EC (General Data Protection Regulation - GDPR). The Regulation, in its Article 17, establishes the right to be forgotten, which binds the data controller, irrespective of the type of storage, to ensure the erasure of personal data when required by the individual, or where the controller no longer has a basis for the processing of personal data. Permanently immutable distributed decentralized storages, therefore, bring with them specific challenges in regard to the GDPR compliance, i.e. with regard to the erasure of data and the public availability of the data.

### State of the art

Several documents in the state of the art deal with a similar topic.

The scientific article "On the Design of a Blockchain-Based System to Facilitate Healthcare Data Sharing" [1] deals with the storage of de-identified linking of data and the hash of data into a blockchain network, whereby the actual data is stored in a separate centralized database. Hashes of the data stored in the blockchain network are used only for verifying the integrity of the data. Control of data access is foreseen. Registered external entities can access data, but approval by the data owner is required, where re-identification is not performed. An external entity gains access to data of a randomly selected owner and is not eligible to choose the data owner.

The scientific article » A Privacy - Preserving Cross - Organizational Authentication / Authorization / Accounting System Using Blockchain Technology « [2] proposes a solution based on storing user access data per each user in the blockchain. The linking data that identifies an individual user is de-identified by using the cryptographic hash function repeatedly. A prerequisite for using the proposed solution is the registration in a system running outside the blockchain network. The data for the authorization of each user is also stored outside the blockchain network. Upon successful authorization, the organization gets access to the user's access privilege data stored in the blockchain network. The solution envisages the use of the crypto token, which is used as a payment method for all the services in the system.

The patent "A system and method for blockchain smart contract data privacy" [3] deals with the transfer of a cryptographic key by which the symmetrically encrypted data is stored on the blockchain network. The transfer is based on asymmetric cryptography. This enables control over the inspection of encrypted data stored on the blockchain network indirectly. With the retrieval of the key, access to the actual data stored on the blockchain network is received, which, due to the properties of the blockchain technology, is permanent and irrevocable by the owner of the data.

The scientific article »A privacy-preserving system for data ownership using blockchain and distributed databases« [4] provides the storage of de-identified linking data on the blockchain network, whereby the linking data is stored in a centralized database. The actual data is stored in a non-encrypted and readable form in a separate distributed database. Re-identification is performed above the data stored in the centralized database, and not through the de-identified linking data stored in the blockchain network. The proposed solution does not allow the data owner control over each separate inspection attempt of his data.

The presentation document »MyMEDIS: A new medical data storage and access system« [5] envisages the control over data inspection by storing encrypted data in a distributed database. The assignment of data access authorizations is governed by the use of asymmetric cryptography, which prevents the data owner from revoking already granted permissions to inspect data.

The scientific article "Decentralized Semantic Identity" [6] proposes a system for managing identities within the NMC network, which stores the linking data to the entire identity of the user (WebID) in the cryptographic token of the same name. The identity is stored in a distributed permanent database. The user proves his identity, using the standardized JWT token and, thus, obtains identity information (WebID).

The scientific article "Privacy-friendly platform for healthcare data in cloud-based on blockchain environment" [7] uses a private blockchain network to store asymmetrically encrypted data. Thus, control over the inspection of data is achieved, which does not allow the data owner to revoke the inspection access to the actual data.

These documents do not allow for proper control of the data owner to access and inspect their data stored in a permanently immutable, distributed and decentralized storage.

Patent application publication US 2005/0043964 A1 discloses a data processing system for patient data.

### Detailed description

The proposed invention presents the solution of the described problem in the form of a method and a device for storing data in a permanently immutable, distributed and decentralized storage, and the control of each separate inspection attempt of the data and the retrieval of data from a permanently immutable distributed and decentralized storage.

The invention is defined by the independent claims. Further, embodiments of the invention are defined by the claims.

The method and device, according to the invention, provide:
- the storage of linking data in a public, permanently immutable, distributed and decentralized storage, which may include personal information, in a manner that is accessible to all entities that have access to the network, but are, by default, de-identified i.e. pseudonymized;
- storing the actual data in a readable form in a permanently immutable, distributed and decentralized storage;
- support for the controlled re-identification of pseudonymized linking data, and for the inspection of the readable format of actual data from permanently immutable, distributed and decentralized storage;
- the control of the data owner over the process of re-identification of pseudonymized linking data, and the inspection of the readable format of actual data in permanently immutable, distributed and decentralized storage, based on the authorization of the owner and a data validation mechanism;
- sending a request from the entity to the data owner for one-time inspection access of his actual data stored in permanently immutable, distributed and decentralized storage;
- control of the process of re-identification of pseudonymized linking data for each inspection request by any user device;
- compliance of the method and the device with the requirements of the GDPR.

The method and device, according to the invention, are described below, and depicted with Figures, wherein the Figures show a block diagram of the method according to the invention and the operation of the device according to the method of the invention.
Figure 1 represents a block diagram of the method according to the invention.
Figure 2 represents the operation of the device according to the proposed invention, i.e. the data storage in the permanently immutable distributed and decentralized storage.
Figure 3 represents the operation of the device according to the method and the invention, i.e. the controlling of each respective inspection request into the actual data from the permanently immutable, distributed, and decentralized storage.

The device CS, which enables the method according to the invention, consists at least of:
- a central processing unit with the associated circuit for the operation of the central processing unit,
- a communication unit for receiving and sending messages and access to, reading and writing data into a permanently immutable, distributed, and decentralized storage DDB;
- a memory needed for the programming and operation of the device and the local database.

At least one data management software is in the permanent memory of the device. Such software may be configured to store data in a permanently immutable, distributed and decentralized storage DDB, as described below. Examples of such data storages are those based on blockchain technology. Part of the permanently immutable, distributed and decentralized storage DDB can also be part of the local permanent memory of the device CS. A permanently immutable, distributed and decentralized storage DDB can be public or private. The CS device must be connected to the network of the permanently immutable, distributed, and decentralized storage DDB.

The device CS may also have separate data management software stored on the local permanent memory (a local database) that is not part of a permanently immutable, distributed, and decentralized database DDB, or, respectfully, the data is stored only within the device's permanent storage. Although the local database is part of the permanent memory of device CS, in this case, the notion of being permanent is guaranteed only to the level that the data stored in the local database are not lost when the device CS restarts. Unlike a permanent immutable, distributed and decentralized storage DDB, the data themselves, as well as the audit trail of any data access and data manipulation from a local database, can be deleted and modified arbitrarily.

The method and device CS include the following key stakeholders: The owner O of the actual data S, the data administrator DA, and the entity EA, which requires an inspection of the actual data from the owner O stored in a permanently immutable, distributed and decentralized DDB. The device CS must be set up so that it is publicly accessible and can communicate with the stakeholders.

Each stakeholder has access to its own electronic device, which enables it the sending of electronic messages to the device CS, and, thus, the execution of the proposed invention. Stakeholder devices may, at the same time, be part of the permanently immutable, distributed, and decentralized storage DDB, whereby such involvement does not affect the operation of the method and the device according to the invention.

The data administrator DA can be: (1) the owner of the actual data S, which is either an individual, a group of individuals, a company or an organization, or (2) an institution IN, which is not the owner O of the actual data S, but has access and permission to the actual data S from the owner O, to manage and store the data in a permanently immutable, distributed and decentralized storage DDB.

The use of the device CS, although publicly available, is restricted to registered users, and to those who can prove their identity successfully i.e. authorize themselves before the device is used. The administrator of the device CS can set its own conditions for the successful registration and the use of the device. Upon each successful registration, the device CS stores user identifiers in its local database.

The settings of the device CS are defined by the device administrator, who is its owner or a manager, authorized by the owner to control and manage the device. The device administrator has full access to the device CS and its components. He ensures flawless operation of the device software and hardware, as well as its security. He can set up a policy for the access and usage of the device CS.

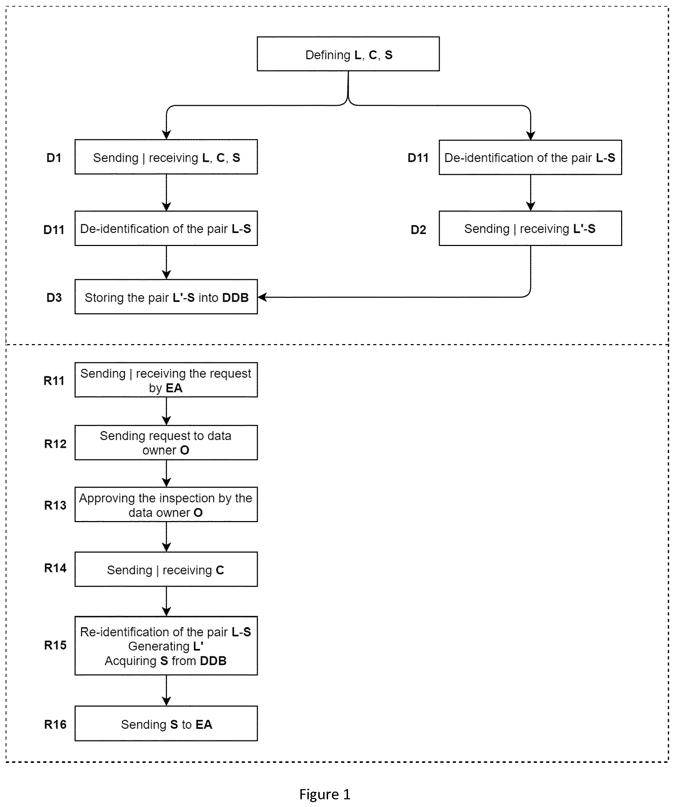

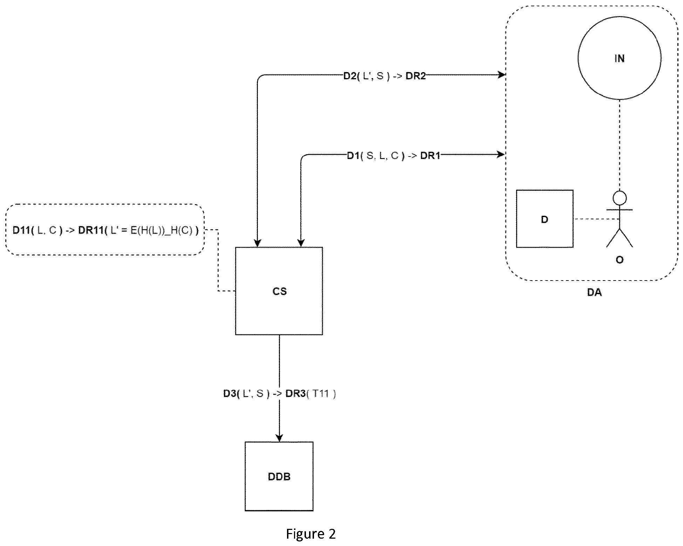

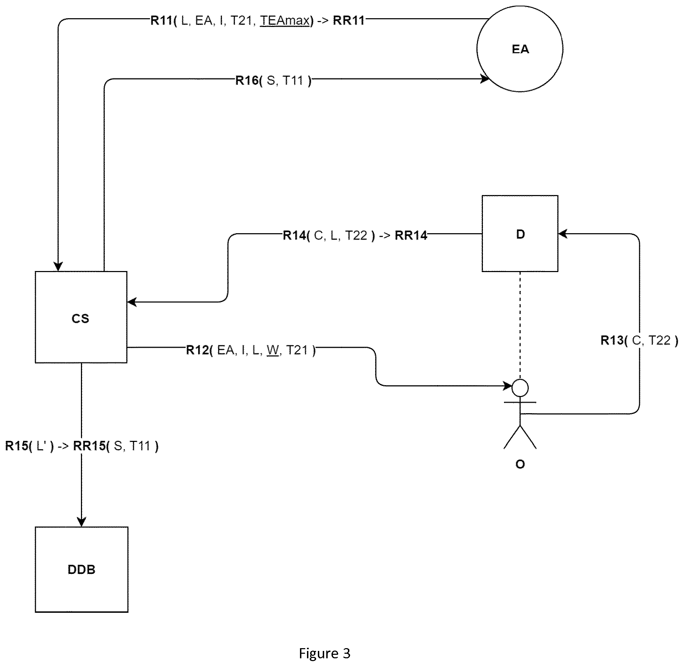

The method, according to the invention shown in Figures 1, 2 and 3, enables the data administrator DA to store data into a permanently immutable, distributed and decentralized storage DDB, gives the owner of data O the control over each data inspection attempt, and the retrieval, as well as the transfer of the data from the permanently immutable, distributed and decentralized storage DDB using the device CS.

The link between the owner O, and the actual data S in a permanent immutable distributed and decentralized storage DDB is in the form of the linking data L, which is de-identified repeatedly, using several cryptographically-based pseudonymization techniques, before storing it into the permanently immutable distributed and decentralized storage DDB. The linking data L, which identifies the owner O uniquely, can be any random content, as well as an indirect or direct identifier of the owner O, whereby the direct identifier can also be any personal information, since it will be de-identified several times before being used as linking data.

Actual data S are the data that the data administrator DA wants to store in a permanently immutable, distributed and decentralized storage DDB. The actual data S are stored in a readable format, thus they are not de-identified, and should, therefore, not contain personal data. The device CS does not validate the actual data S before storing them into the permanently immutable, distributed and decentralized storage DDB, so the data administrator DA must ensure that they comply with the presented restrictions.

To facilitate the de-identification process, after the successful authorization and before the de-identification process, the data administrator DA stores the linking data L and the contact information (e.g., email address) of a particular owner O of the data in the local database of the central device CS. The data administrator DA can, additionally, store connection and authentication data in the local database of the device CS, thereby enabling the automatic retrieval of the actual data S of the owner O from the devices controlled by the data administrator DA, which is then being stored in a permanent immutable, distributed and decentralized storage DDB according to the method and the invention. The linking data L can be stored in a pseudonymized form in the local database. The linking data L defines the data administrator DA independently, or in agreement with the entity EA.

The method of the invention includes a first phase and a second phase, whereby the first comprises the following steps:
- defining of the linking data L, which defines the data owner O and the connection between the data owner O and the actual data S uniquely, where the linking data L is defined by the data administrator DA independently, or in agreement with the entity EA;
- defining of the secret data C, which corresponds to Standards regarding the complexity and entropy of cryptographic keys, whereby the secret data C is specified by the data administrator DA or the data owner O, and is stored safely by the data owner O, or it can also be stored by the data administrator DA;
- defining of the actual data S;
- de-identification of the pair of the linking data L and the corresponding actual data S, so that a unique pseudonymized linking data L' is produced, wherein the pseudonymization of the linking data L is performed by the device CS or the data administrator DA (D11) ;
- entering the de-identified data pair, namely the pseudonymized linking data L' and the corresponding actual data S, into the permanently immutable, distributed and decentralized storage DDB by the device CS (D3);
   and the second phase, which comprises the following steps:
- sending the request for the actual data S belonging to the data owner O, by the entity EA, to the device CS, whereby the linking data L is sent within the request (R11);
- storing the request in the local database or temporary storage of the device CS;
- based on the received request and the linking data L, sending an electronic message from the device CS to the electronic device D of the data owner O to acquire permission to inspect the actual data S from the data owner O stored in the permanently immutable, distributed and decentralized storage DDB (R12);
- approving the inspection of the actual data S from the data owner O, by entering the secret data C into the electronic device D (R13);
- sending the data owner's approval to the device CS, whereby the secret data C (R14) is transmitted with the approval;
- re-identification of the pair of the linking data L and the corresponding actual data S, by the device CS, based on the received linking data L and the received secret data S, whereby re-identification includes generation of the pseudonymized linking data L' from the received linking data L and the received secret data C, using the same method as in the previous de-identification step, and, consequently, obtaining the data owner's O actual data S from the permanently immutable, distributed and decentralized storage DDB, by using the pseudonymized linking data L' (R15);
- sending the data owner's O actual data S to the entity EA by the device CS (R16), wherein the first phase may be carried out any n-times, and wherein the second phase can be carried out at any n-times, while at least one execution of the first phase was carried out.

Storing data into the permanently immutable, distributed and decentralized storage DDB is performed by the device CS based on the steps D1 or D2. On behalf of the data administrator DA, the device CS can perform the data collection automatically from the electronic storage in the ownership of the data administrator DA to which the device CS has access. For the purpose of accessing the electronic storage owned by the data administrator DA, the device CS uses the connection and authentication data stored in the local database, which was entered at the time of the registration from the data administrator DA itself.

In step D1, the data administrator DA sends to the device CS the linking data L, the actual data S, and the secret data C, for example, by transmitting an electronic message with a body message containing the linking data L, the actual data S and the secret data C. The secret data C are data selected by the data administrator DA or the data owner O, and stored safely by the data owner O or data administrator DA, and must be selected so that they meet the Standards or good practice as regarding the length and the entropy of cryptographic keys, as they will be used in the de-identification process. In the case of step D1, the secret data C in the body of the electronic message is sent in a readable form. The transmission of the electronic message is performed through a private and secure channel. In the case that device CS is being used in the form of a web interface, then the electronic message is sent in the form of a safe and encrypted connection, using the HTTPS protocol. The electronic message recipient receives a response, i.e. a return message DR1, or a confirmation for the sent electronic message.

Step D1 triggers step D11.

In step D11, the de-identification of the pair of the linking data L and the corresponding actual data S is performed so as to produce a unique pseudonymized linking data L'.

In one embodiment the pseudonymization of the linking data L in order to obtain the pseudonymized linking data L', is performed by a symmetric cryptographic encryption function (e.g., AES-256), wherein the data to be encrypted is the hash value H(L) of the linking data L, which is generated by using a one-way cryptographic hash function (e.g. SHA-256), and the key of the symmetric cryptographic encryption function is the secret data C. A simple presentation of the calculation is E(H(L))_(C). Personal data may also be used as the linking data L since it is de-identified several times using a one-way cryptographic function.

In the second embodiment the pseudonymization of the linking data L in order to obtain the pseudonymized linking data L', is performed by a symmetric cryptographic encryption function (e.g., AES-256), wherein the data to be encrypted is the hash value H(L) of the linking data L, which is generated by using a one-way cryptographic hash function (e.g. SHA-256), and the key of the symmetric cryptographic encryption function is the hash of H(C) of the secret data C, generated by a one-way cryptographic hash function. A simple presentation of the calculation is E(H(L))_H(C). Personal data may also be used as the linking data L since it is de-identified several times using a one-way cryptographic function.

Step D11 triggers step D3.

In step D3 the pseudonymized linking data L' and the associated actual data S are stored into a permanently immutable, distributed and decentralized storage DDB in the form of a data transaction. The connection between the aforementioned data may be in a form of a key-value pair, where the key is the pseudonymized linking data L' and the value the actual data S. When the data is stored in the permanently immutable, distributed and decentralized storage DDB, this automatically generates a timestamp T11, and stores this together with the data.

Storing data to a permanently immutable distributed and decentralized storage DDB is performed by transferring the data through the network to one of the nodes of an external permanent immutable, distributed and decentralized storage DDB, or by storing the data directly into the permanent storage of the device CS, if said device has a dedicated data management software that is configured to be part of the permanently immutable, distributed and decentralized storage DDB.

The result of the request for storing of new data to a permanently immutable, distributed and decentralized storage DDB is received by the device CS in the form of a confirmation message DR3, that has in the message body the timestamp T11 of the storing of the new data in the permanently immutable, distributed and decentralized storage DDB.

In step D2, the data administrator DA sends the actual data S and the pseudonymized linking data L' to the central device CS, for example by sending an electronic message with the message body containing the actual data S and the pseudonymized linking data L'. The same as in step D1, the data S represents the owner's O actual data in a readable form that the administrator DA wants to store in a permanently immutable, distributed, and decentralized storage DDB. Unlike step D1, the pseudonymized linking data L' is sent instead of the secret data C.

In this case, the data administrator DA performs the pseudonymization of the linking data L. The data administrator DA, therefore, prepares the pseudonymized linking data L' in such a way that it is aligned with the settings of the device CS, i.e. chooses an appropriate secret data C, a cryptographic hash function (e.g. SHA-256), asymmetric cryptographic encryption function (e.g. AES-256) and the correct procedure, in order to execute the pseudonymization of the linking data L as described in step D11. The data administrator DA may send a message to the device CS by managing the device CS. The message may be sent over a private or an open channel, since the secret data C is not in a readable format. In the case of managing the CS as a web interface, the message may be sent via a private channel in a form of a safe, encrypted connection using the HTTPS protocol. The data administrator DA receives a feedback message DR1, or a confirmation of the sent message.

Step D2 triggers step D3.

The device CS may be configured to execute steps D1 and/or D2 on demand or periodically.

In one embodiment, after storing the data pair into a permanently immutable, distributed and decentralized storage DDB, the device CS deletes all received information from its memory (e.g. local database) except the linking data L and the associated contact information of the data owner O for the subsequent contacting of the data owner O in order to obtain the permission for the data inspection.

In the second embodiment, after storing the data into a permanently immutable, distributed and decentralized storage DDB, the device CS deletes all the received data from its memory (e.g. local database), whereby contacting of the data owner O, in order to obtain the permission for the data inspection, is carried out through a dedicated application, on the basis of the received linking data L. The application is installed on a data owner's O personal device D, and connected to a dedicated information-telecommunication service, which is run on the device CS.

An entity EA that is a registered user on the device CS may send a request to view the data owner's O actual data S, stored in a permanent immutable, distributed and decentralized storage DDB. The data owner O receives a request for the data inspection, which he personally supervises/manages at each separate attempt. The entity EA triggers the request with the step R11, whereby it requires the essential knowledge of the data owner's O linking data L.

In step R11, a request to inspect the actual data S belonging to the data owner O is sent by the entity EA to the device CS, whereby the linking data L is sent within the request. For example, the request is in the form of an electronic message, which contains the following parameters in the message body: Linking data L, identifier of entity EA, description of the request I, timestamp T21 and, optionally, time TEAmax. Linking data L may be a direct or indirect identifier of the data owner O, for which the entity EA wants to retrieve the data stored in a permanent immutable, distributed and decentralized storage DDB. The description of the request I is the content specified by the entity EA, and covers, for example, the reason for the data inspection. Time TEAmax is defined by the entity EA, and represents the maximum allowable waiting time for the inspection of the required data S is to be fulfilled.

Sending of the electronic message may be performed by the entity EA, by operating the device CS as described in the previous paragraphs. In the case of managing the device CS as a web interface, the message is sent via a private channel. A private channel may be realized in the form of a safe, encrypted connection using the HTTPS protocol.

The entity EA receives a confirmation message RR11, which also warns/informs the entity EA that the inspection of the actual data S stored in permanent immutable distributed and decentralized storage DDB, will be possible only after the data owner O authorizes the request, since he has the control over each data inspection request.

Step R11 may be initialized by the entity EA manually or automatically, and either on demand or at a defined repetitive interval.

The device CS stores the request information, i.e. the content of the electronic message, into the local database or into the device's temporary memory. This functionality supports compliance with GDPR.

Step R11 triggers step R12.

In step R12, on the basis of the received linking data L, a message is sent from the device CS to the data owner's O electronic device D, for acquiring the permission for the inspection of the owner's O actual data S. This is performed, for example, in the form of an electronic message which, in the message body, contains the following parameters: Linking data L, the identifier of the entity EA, information I for data inspection request by the entity EA, and the timestamp T21 of the request. Depending on the method of sending the electronic message, the body of the message may also contain a web link W directed towards the device CS, through which the data owner O can control the data inspection. Link W is the web link which is part of publicly accessible web, and is associated uniquely with a request i.e. with the electronic message of step R11.

Sending an electronic message to the data owner O may be done in several ways. Depending on the method of sending, the device CS obtains from its local database additional (contact) data of the data owner O associated with the linking data L. Among the possible ways to send the electronic message to the data owner O are: (1) the transmission of the message via the SMTP protocol as an e-mail addressed with the data owner's O e-mail address, (2) the transmission of the message via the SMPP and GSM network protocol as an SMS addressed with the data owner's O mobile number, and (3) using the WebSocket/WebSocket Secure protocol for a push notification message towards the data owner's O personal electronics device D, which is connected to the network.

Sending the electronic message with the WebSocket/WebSocket Secure protocol in the form of a push notification message towards the data owner's O personal electronic device D connected to the network is possible only if the data owner's O personal electronic device D has a dedicated software or application installed in its permanent memory, which enables the receiving of push notification messages from the device CS. The data owner's O personal electronic device D must be connected to the network and accessible by the device CS.

Step R12 is followed by step R13, which may be executed by the data owner O at any time, however, if TEAmax and TCSmax are defined, within the previously defined maximum allowed times TEAmax and TCSmax, if he wants to authorise the inspection of the actual data S. TCSmax time is defined by the device CS administrator, and represents the maximum allowed waiting time for the data owner O to respond to the inspection request.

In step R13, the data inspection authorization is made by the data owner O, which is performed by entering the secret data C into the electronic device D at time T22.

The device D may be a personal electronic device connected to the network, which has dedicated software for the control of the data inspection and retrieval of the actual data S from the permanently immutable distributed and decentralized storage DDB. The device D may also be any other form of electronic device, that is connected to the internet and has a software for the use of the World Wide Web (e.g., browser). In this case, using such software, the data owner O connects to the web link W, which is part of the message body of the electronic message in step R12. The link W leads the data owner O, using a private HTTPS-protected channel, to a web interface that is part of the device CS. The web interface offers the data owner O information about the particular single inspection request for the data stored in the permanently immutable, distributed and decentralized storage DDB, as well as an input field for the secret data C, by which the user verifies its identity and thus accepts or denies the inspection of the actual data S from a permanent, immutable distributed and decentralized storage DDB.

Step R13 triggers step R14.

In step R14, a confirmation is sent from the data owner's O device D to the device CS, whereby the secret data C is also sent in the case of the approval for the data inspection.

In the case that the data owner O, during the execution of step R13, entered the secret data C, and thus approved a particular one-time data inspection of the actual data S stored in the permanent immutable, distributed and decentralized storage DDB, then the body of the message contains the linking data L, the secret data C and the timestamp T22 of the secret data C entry.

Sending a message to the device CS depends on the device D. In the case that the device D is a personal electronic device that has a dedicated software for the control of re-identification of the linking data L and the potential inspection of the actual data S, stored in a public permanently immutable distributed and decentralized storage DDB, then sending of the message is carried out via a private channel and the HTTPS or WebSocket Secure protocol to the device's CS interface. If the data owner O does not have a personal electronic device D with the aforementioned dedicated software installed, but has access to an electronic device D which has the software for using the World Wide Web, then sending of the message is performed via a private channel using the HTTPS protocol towards the web interface of the device CS.

The device CS may be so configured that the data owner O has a limited time for managing the control of re-identification of the linking data L, and, therefore, the inspection of the actual data S. Part of step R14, in the case of a defined time limit, is to check whether the difference between the timestamp T21 (trigger time) and T22 (control time) is shorter than the allowed time TCSmax. The execution of step R14 is interrupted if the difference is greater than the acceptable difference. If the entity EA has set the maximum allowed time TEAmax for managing the data inspection request by the data owner O, then step R14 also includes this verification. The execution of the step R14 is interrupted if the difference is greater than the acceptable time. In both cases, the request for step R11 can be deleted from the device's CS temporary memory (e.g. local database).

Message RR14 is displayed on the data owner's O device D, i.e. the confirmation for successful or unsuccessful control management of a single inspection of the actual data S from a permanent immutable distributed and decentralized storage DDB.

When the data owner O executes the inspection control management in a timely manner, then step R14 triggers step R15.

In step R15, re-identification of the pair of the linking data L and the corresponding actual data S is performed, based on the received linking data L and the received secret data C, whereby re-identification involves generatinh of the pseudonymized linking data L' from the received linking data L and the received secret data C in step R14, in the same manner as in step D11, as well as obtaining the data owner's O actual data S from the permanently immutable distributed and decentralized storage DDB, based on the pseudonymized linking data L'. The execution of step R15 is interrupted in the absence of a request for the inspection.

In the case, when the data owner O, during the execution of step R13, i.e. when entering the secret data C, enters the correct version of the secret data C, then the pseudonymized linking data L', generated by the re-identification step, is identical to the one stored in a permanent immutable distributed and decentralized storage DDB. In the case that the owner O deliberately or unintentionally enters the wrong secret data C, then the generated pseudonymized linking data L' will be different from the one stored in a permanently immutable, distributed and decentralized storage DDB and, therefore, the search for the actual data S from the permanent immutable distributed and decentralized DDB storage will be unsuccessful.

Searching and retrieving for the data from the permanent immutable distributed and decentralized DDB may be performed by using a network connection to one of the nodes of the permanent immutable distributed and decentralized storage DDB, or directly from the permanent memory of the device CS, if the device CS has a data management software which is set to be part of the permanent immutable distributed and decentralized storage DDB.

Part of step R15 is the transfer of the search result RR15 from a permanently immutable distributed and decentralized storage DDB to the device CS. In the case when the correct version of the secret data C was used, the correct pseudonymized linking data L' is generated, and the search will be successful, thus, the resulting RR15 will contain the actual data S and the timestamp T11, which represents the time of storing the actual data S into a permanently immutable distributed and decentralized storage DDB. Otherwise, the search will fail. The device CS can store the actual data S and the timestamp T11 in conjunction with the linking data L into its permanent or temporary memory (e.g. local database).

Step R15 triggers step R16.

In step R16, the data owner's O actual data S is sent by the device CS to the entity EA, for example, in the form of an electronic message, which in the message body, may contain the data owner's O actual data S and the associated timestamp T11. Data S and the timestamp T11 are retrieved from the permanently immutable distributed and decentralized storage DDB during the execution of step R15, and may be stored in the permanent or temporary memory (e.g. local database) of the device CS at the same time. The data is related to the request and the linking data L of step R11. The body of the message may also be empty, in the case when retrieving of actual data S from a permanently immutable distributed and decentralized storage DDB, during the execution of step R15, was not successful.

In the case when the device CS at step R11 is used in the form of a web interface, then the electronic message of step R16 can be the response or feedback sent using the WebSocket/WebSocket Secure protocol for step R11.

Since the data owner O controls the response for the one-time inspection request (step R13) for the actual data S by himself, the control may be executed at any time, but not later than the maximum allowed control time (TEAmax, TCSmax). In this case, the electronic message of step R16 may be separated from step R11 in such a way that step R16 is performed after a certain time and not directly as a feedback of step R11. In such cases, sending the electronic message of step R16 can be executed by the device CS in several ways: (1) transmission of the message via the SMTP protocol as an e-mail addressed with the entity's EA e-mail address stored in the local database, (2) transmission of the message via the SMPP and GSM network protocol as an SMS/MMS addressed with the entity's EA mobile number stored in the local database, and (3) using the WebSocket/WebSocket Secure protocol for a push notification message towards the entity's EA electronics device, which is connected to the network and has an appropriate software for managing the device CS installed, whereby the device CS has the connection for the entity's EA electronic device stored in a local database; (4) using the HTTP/HTTPS protocol connected to a specific entity's EA web interface, whereby the device CS has the data for accessing the entity's EA web interface stored in the local database; (5) using the TCP/IP protocol, and a connection to the entity's EA local database, or a direct connection to the entity's EA permanent memory, whereby the device CS has the connection and access data stored in a local database.

The device (CS) for storing data in a permanently immutable, distributed and decentralized storage (DDB) and controlling each inspection request of data from a permanently immutable, distributed and decentralized storage (DDB), whereby the device is connected to the network and includes at least a central processing unit with the associated circuit for operation the central processing unit, a communication unit for receiving and sending electronic messages, and accessing, reading and writing data from DDB, memory needed for programming and operating the device and a local database, whereby the central processing unit is adapted to execute the following steps:
- receiving the linking data L, the secret data C and the corresponding actual data S transmitted by the data administrator DA (D1) and de-identification of the pair of linking data L and the corresponding actual data S, by creating a unique pseudonymized linking data L' (D11);
- or receiving the pseudonymized linking data L' and the corresponding actual data S sent by the data administrator DA (D2);
- entering the pseudonymized linking data L' and the corresponding actual data S, into a permanently immutable and decentralized storage DDB (D3);
- receiving the request for the data owner's O actual data S, together with the linking data L, which is sent by the entity EA, and storing the request in the local database (11);
- based on the received linking data L, sending a request to the data owner's O electronic device D for the data owner's O actual data S inspection permission (R12);
- accepting the actual data S inspection approval from the data owner O, whereby the secret data C (R14) is transmitted with the approval;
- re-identification of the pair of the linking data L' and the corresponding actual data S, based on the received linking data L and received secret data C, whereby re-identification involves generating a pseudonymized linking data L' from the received linking data L and the received secret data C in the same manner as in the previous de-identification step, and obtaining the data owner's O actual data S from a permanently immutable distributed and decentralized storage DDB on the basis of the pseudonymized linking data L' (R15);
- sending the data owner's O actual data S to the entity EA (R16).

With the help of the device CS, the data owner O has complete control over the inspection into the actual data S stored in a permanent immutable distributed and decentralized storage DDB. The control over the inspection of actual data S is carried out by the owner O himself by executing the re-identification of the pair of the linking data L and the corresponding actual data S, based on the secret data C. The protection of the secret data C must be guaranteed by the data owner O, since knowledge of this enables anyone to control the inspection of the actual data S.

If the data owner wants to disable the inspection of the stored actual data S in a permanently immutable distributed and decentralized storage DDB forever, he must destroy the existence of the secret data C irreparably. Without the secret data C it is impossible to re-identify the pair of the linking data L and the corresponding actual data S, with which the actual data S is obtained from the permanently immutable and distributed decentralized storage of DDB, and since the linking data can also be personal data, the proposed invention also achieves compatibility with the GDPR.

Even if the secret key C is alienated/stolen from the data owner O, the original value of the linking data L cannot be determined because of the use of a one-way cryptographic hash function.

In the case when a public permanently immutable distributed and decentralized storage DDB is used, there is a possibility for a malicious person to access the data in the node's storage (de-identified linking data L' and the actual data S) and perform statistical analyses, which possibly may reveal the identity of the data owner O. Because the device CS cannot influence such a potential attack, the data administrator DA must ensure that the data owner's identity is properly protected.

### References:

1 A. Theodouli; S. Arakliotis; K. Moschou; K. Votis; D. Tzovaras in 2018 17th IEEE International Conference on Trust, Security and Privacy in Computing and Communications / 12th IEEE International Conference on Big Data Science and Engineering (TrustCom / BigDataSE)
2 P. Joy Lu; L. Yeh; J. Huang in 2018 IEEE International Conference on Communications (ICC)
3 A. BEN-ARI in WO2017090041A1
4 S. Bertram; C. Georg at https://arxiv.org/abs/1810.11655v1
5 A. Kovach, G. Ronai at https://mymedis.in/documents/MEDIS-White-Paper.pdf
6 JG Faísca, JQ Rogado in SEMANTiCS 2016 Proceedings of the 12th International Conference on Semantic Systems
7 A. Al Omara, M. Zakirul Alam, B. Anirban Basu, S. Kiyomoto, M. Shahriar Rahman in Future Generation Computer Systems

## Claims

1. A method for storing data in a public, permanently immutable, distributed and decentralized storage (DDB) and controlling each inspection request and data retrieval from a public, permanently immutable, distributed and decentralized storage (DDB), **characterized in that** it comprises a first phase and a second phase, whereby the first phase includes the following steps:
- defining a linking data (L), which comprises personal data and defines an owner (O) and a link between the owner (O) and an actual data (S) unambiguously, whereby the linking data (L) is determined by a data administrator (DA) independently, or in agreement with an entity (EA);
- defining a secret data (C), which conforms to the Standards of complexity and entropy of cryptographic keys, whereby the secret data (C) is specified by the data administrator (DA) or the data owner (O) and the secret data (C) is kept safely by the data owner (O) or by the data administrator (DA);
- defining the actual data (S);
- de-identification (D11) of a pair of the linking data (L) and the corresponding actual data (S) to generate a unique pseudonymized linking data (L'), wherein pseudonymization of the linking data (L) is carried out by the device (CS) or the data administrator (DA);
- entering (D3) the de-indented pair of data, namely the pseudonymized linking data (L') and the corresponding actual data (S), into the public, permanently immutable distributed and decentralized storage (DDB) by the device (CS);
and the second phase including the following steps:
- sending a request (R11) for the actual data (S) belonging to the owner (O) by the entity (EA) to the device (CS), whereby the linking data (L) is sent within the request (R11) and storing the request in a permanent or temporary memory of the device (CS);
- based on the received linking data (L), sending a request (R12) from the device (CS) to an electronic device (D) of the data owner (O) to acquire permission to inspect the actual data (S) of the owner (O);
- approving the inspection (R13) by the owner (O) by entering the secret data (C) into the electronic device (D), within a defined maximum allowed waiting time;
- sending the approval (R14) to the device (CS), wherein the secret data (C) is sent with the approval;
- re-identification (R15) of the pair of the linking data (L) and the corresponding actual data (S), based on the received linking data (L) and the received secret data (C), wherein re-identification (R15) includes genetaring the pseudonymized linking data (L') from the received linking data (L) and the received secret data (C) in the same manner as in the previous de-identification step (D11), and obtaining the actual data (S) of the owner (O) from the public, permanently immutable and decentralized storage (DDB) based on the pseudonymized linking data (L'), by the device (CS);
- sending (R16) the actual data (S) of the owner (O) to the entity (EA) by the device (CS),
wherein the first phase can be carried out an optional number of times, and wherein the second phase can be carried out an optional number of times after at least one execution of the first phase,
wherein the pseudonymization of the linking data (L), in order to obtain the pseudonymized linking data (L'), is carried out by a symmetric cryptographic encryption function, wherein the data to be encrypted is a hash (H(L)) of the linking data (L) generated by a one-way cryptographic hash function, and a key of the symmetric cryptographic encryption function is a hash (H(C)) of the secret data (C) generated by a one-way cryptographic hash function, and
wherein the device (CS), once the data has been stored into the public, permanently immutable distributed and decentralized storage (DDB), deletes all the received data from its permanent memory, wherein contacting the owner (O) to obtain the permission to inspect is performed via a dedicated application based on the received linking data (L), wherein the application is installed on the personal electronic device (D) of the owner (O) and connected with a dedicated information-telecommunication solution within the device (CS).

2. The method of claim 1, **characterized in that** the pseudonymization of the linking data (L), in order to obtain the pseudonymized linking data (L'), is carried out by a symmetric cryptographic encryption function, wherein the data to be encrypted is a hash (H(L)) of the linking data (L) generated by a one-way cryptographic hash function, and a key of the symmetric cryptographic encryption function is the secret data (C).

3. The method of claims 1 to 2, **characterized in that** pseudonymization of the linking data (L) is carried out by the device (CS) after sending (D1) the linking data (L), the secret data (C) and the corresponding actual data (S), by the data administrator (DA).

4. The method of claims 1 to 2, **characterized in that** pseudonymization of the linking data (L) is carried out by the data administrator (DA) who sends (D2) the pseudonymized linking data (L') and the corresponding actual data (S) to the device (CS).

5. The method of claim 1, **characterized in that** the device (CS), once the data has been stored into the public, permanently immutable distributed and decentralized storage (DDB), deletes all the received data from its permanent memory, with the exception of the linking data (L) and the corresponding contact data of the owner (O), which allows for subsequent contacting of the owner (O) to obtain permission to inspect.

6. The method of claim 1, **characterized in that** a response for sending the request (R11) for the actual data (S) belonging to the owner (O) and/or a response for sending the request (R12) from the device (CS) to the owner's (O) electronic device (D) to obtain the permission to inspect the actual data (S) of the owner (O), is limited in time, wherein a maximum allowed waiting time (TEAmax) for inspecting the data (S) is defined by the entity (EA), and a maximum allowed waiting time (TCSmax) for getting the response from the owner (O) of the actual data (S) for the control over the inspection request is determined by an administrator of the device (CS).

7. A device (CS) for storing data in a public, permanently immutable, distributed and decentralized storage (DDB) and controlling each inspection request and data retrieval from the public, permanently immutable, distributed and decentralized storage (DDB), wherein the device is connected to a network and includes at least a central processing unit with an associated circuit for the operation of the central processing unit, a communication unit for receiving and sending electronic messages, and accessing, reading and writing data in the public, permanently immutable, distributed and decentralized storage (DDB), a memory needed for programming and operating of the device and for a local database, wherein the central processing unit is adapted to perform the following steps:
- receiving (D1) a linking data (L), a secret data (C) and a corresponding actual data (S), and de-identification (D11) of a pair of the linking data (L) and the corresponding actual data (S) to generate a unique pseudonymized linking data (L');
- or receiving (D2) the pseudonymized linking data (L') and the corresponding actual data (S);
- entering (D3) the pseudonymized linking data (L') and the corresponding actual data (S) into the public, permanently immutable distributed and decentralized storage (DDB);
- receiving a request (R11) for the actual data (S) belonging to the owner (O), together with the linking data (L) and storing the request in a permanent memory;
- based on the received linking data (L), sending a request (R12) to an electronic device (D) of the data owner (O) to acquire permission to inspect the actual data (S) of the owner (O);
- receiving an approval (R14) from the owner (O) for inspecting the actual data (S) of the owner (O), wherein the secret data (C) are sent with the approval;
- re-identification (R15) of the pair of the linking data (L') and the coresponding actual data (S), based on the received linking data (L) and the received secret data (C), wherein the re-identification (R15) includes generating a pseudonymized linking data (L') from the received linking data (L) and the received secret data (C), wherein the pseudonymized linking data (L') are generated in the same manner as in the previous de-identification step (D11) if the previous de-identification step (D11) has been performed, and retrieving the actual data (S) of the owner (O) from a public, permanently immutable distributed and decentralized storage (DDB) based on the pseudonymized linking data (L');
- sending (R16) the actual data (S) of the owner (O) to an entity (EA),
wherein the linking data (L) comprises personal data and defines the owner (O) and a link between the owner (O) and the actual data (S) unambiguously,
wherein the secret data (C) conforms to the Standards of complexity and entropy of cryptographic keys, wherein the pseudonymization of the linking data (L), in order to obtain a pseudonymized linking data (L'), is performed by a symmetrical cryptographic encryption function, wherein the data to be encrypted is a hash (H(L)) of the linking data (L) generated by a one-way cryptographic hash function, and a key of the symmetric cryptographic encryption function is a hash (H(C)) of the secret data (C) generated by a one-way cryptographic hash function, and
wherein, once the data has been stored into a public, permanently immutable distributed and decentralized storage (DDB), said device deletes all the received data from its permanent memory, wherein contacting the owner (O) to obtain permission to inspect is performed via a dedicated application based on the received linking data (L), wherein the application is installed on a personal device (D) of the owner (O) and connected with a dedicated information-telecommunication solution within the device (CS).

8. The device of claim 7, **characterized in that** the pseudonymization of the linking data (L) in order to obtain the pseudonymized linking data (L') is performed by a symmetrical cryptographic encryption function, wherein the data to be encrypted is a hash (H(L)) of the linking data (L), generated by a one-way cryptographic hash function, and a key of the symmetric cryptographic encryption function are the secret data (C) .

9. The device of claims 7 to 8, **characterized in that**, once the the data has been stored into a public, permanently immutable distributed and decentralized storage (DDB), said device deletes all the received data from its permanent memory, with the exception of the linking data (L) and the corresponding contact data of the owner (O), which allows for a subsequent contacting of the owner (O) to obtain permission to inspect.

## Patentansprüche

1. Verfahren zur Speicherung von Daten in einem öffentlichen, dauerhaft unveränderlichen, verteilten und dezentralen Speicher (DDB) und zur Steuerung jeder Inspektionsanfrage und Datengewinnung aus einem öffentlichen, dauerhaft unveränderlichen, verteilten und dezentralen Speicher (DDB), **dadurch gekennzeichnet, dass** er eine erste Phase und eine zweite Phase umfasst, wobei die erste Phase die folgenden Schritte umfasst:
- Definieren von Verknüpfungsdaten (L), die persönliche Angaben umfassen und einen Besitzer (O) sowie eine Verbindung zwischen dem Besitzer (O) und den Ist-Daten (S) eindeutig definieren, wobei die Verknüpfungsdaten (L) von einem Datenadministrator (DA) unabhängig oder in Übereinstimmung mit einer Entität (EA) bestimmt werden;
- Definieren von geheimen Daten (C), die den Standards der Komplexität und Entropie kryptographischer Schlüssel entsprechen, wobei die geheimen Daten (C) durch den Datenadministrator (DA) oder den Datenbesitzer (O) spezifiziert werden und die geheimen Daten (C) durch den Datenbesitzer (O) oder durch den Datenadministrator (DA) sicher verwahrt werden;
- Definieren der Ist-Daten (S);
- De-Identifikation (D11) eines Paares der Verknüpfungsdaten (L) und der entsprechenden Ist-Daten (S) zur Erzeugung der eindeutigen pseudonymisierten Verknüpfungsdaten (L'), wobei die Pseudonymisierung der Verknüpfungsdaten (L) durch die Vorrichtung (CS) oder den Datenadministrator (DA) durchgeführt wird;
- Eingeben (D3) des de-indentifizierten Datenpaares, nämlich der pseudonymisierten Verknüpfungsdaten (L') und der entsprechenden Ist-Daten (S), in den öffentlichen, dauerhaft unveränderbaren, verteilten und dezentralen Speicher (DDB) durch die Vorrichtung (CS);
und die zweite Phase die folgenden Schritte umfasst:
- Senden einer Anfrage (R11) für die zum Besitzer (O) gehörenden Ist-Daten (S) durch die Entität (EA) an die Vorrichtung (CS), wobei die Verknüpfungsdaten (L) innerhalb der Anfrage (R11) gesendet werden
und Speicherung der Anfrage in einem permanenten oder temporären Speicher der Vorrichtung (CS);
- basierend auf den empfangenen Verknüpfungsdaten (L), Senden einer Anfrage (R12) von der Vorrichtung (CS) an ein elektronisches Gerät (D) des Datenbesitzers (O), um eine Erlaubnis zum Inspizieren der Ist-Daten (S) des Besitzers (O) zu erhalten;
- Genehmigung der Inspektion (R13) durch den Besitzer (O) durch Eingabe der geheimen Daten (C) in das elektronische Gerät (D) innerhalb einer definierten maximal erlaubten Wartezeit;
- Senden der Genehmigung (R14) an die Vorrichtung (CS), wobei die geheimen Daten (C) mit der Genehmigung gesendet werden;
- Re-Identifikation (R15) des Paares der Verknüpfungsdaten (L) und der entsprechenden Ist-Daten (S), basierend auf den empfangenen Verknüpfungsdaten (L) und den empfangenen geheimen Daten (C), wobei die Re-Identifikation (R15) die Erzeugung der pseudonymisierten Verknüpfungsdaten (L') aus den empfangenen Verknüpfungsdaten (L) und den empfangenen Geheimdaten (C) in gleicher Weise wie im vorhergehenden De-Identifikationsschritt (D11) umfasst, und Erhalten der Ist-Daten (S) des Besitzers (O) aus dem öffentlichen, dauerhaft unveränderlichen und dezentralen Speicher (DDB) basierend auf den pseudonymisierten Verknüpfungsdaten (L') durch die Vorrichtung (CS);
- Senden (R16) der Ist-Daten (S) des Besitzers (O) an die Entität (EA) durch die Vorrichtung (CS), wobei die erste Phase eine beliebige Anzahl von Malen durchführbar ist, und wobei die zweite Phase nach zumindest einer Durchführung der ersten Phase beliebig oft ausgeführt werden kann, wobei die Pseudonymisierung der Verknüpfungsdaten (L), um die pseudonymisierten Verknüpfungsdaten (L') zu erhalten, durch eine symmetrische kryptographische Verschlüsselungsfunktion durchgeführt wird, wobei die zu verschlüsselnden Daten ein Hash (H(L)) der von einer Einweg-kryptographischen Hash-Funktion erzeugten Verknüpfungsdaten (L) sind und ein Schlüssel der symmetrischen kryptographischen Verschlüsselungsfunktion ein Hash (H(C)) der von einer Einweg-kryptographischen Hash-Funktion erzeugten Geheimdaten (C) ist, und
wobei die Vorrichtung (CS) nach dem Speichern der Daten in den öffentlichen, dauerhaft unveränderbaren, verteilten und dezentralen Speicher (DDB) alle empfangenen Daten aus ihrem permanenten Speicher löscht, wobei die Kontaktierung des Besitzers (O) zum Erhalt der Erlaubnis über eine dedizierte Applikation basierend auf den empfangenen Verknüpfungsdaten (L) erfolgt, wobei die Applikation auf dem persönlichen elektronischen Gerät (D) des Besitzers (O) installiert und mit einer dedizierten Informations-Telekommunikationslösung innerhalb der Vorrichtung (CS) verbunden ist.

2. Verfahren nach Anspruch 1, **dadurch gekennzeichnet, dass** die Pseudonymisierung der Verknüpfungsdaten (L), um die pseudonymisierten Verknüpfungsdaten (L') zu erhalten, durch eine symmetrische kryptographische Verschlüsselungsfunktion durchgeführt wird, wobei die zu verschlüsselnden Daten ein Hash (H(L)) der von einer Einweg-kryptographischen Hash-Funktion erzeugten Verknüpfungsdaten (L) sind und ein Schlüssel der symmetrischen kryptographischen Verschlüsselungsfunktion die Geheimdaten (C) sind.

3. Verfahren nach Anspruch 1 bis 2, **dadurch gekennzeichnet, dass** nach dem Versenden (D1) der Verknüpfungsdaten (L), der geheimen Daten (C) und der entsprechenden Ist-Daten (S) durch den Datenadministrator (DA) eine Pseudonymisierung der Verknüpfungsdaten (L) durch die Vorrichtung (CS) durchgeführt wird.

4. Verfahren nach Anspruch 1 bis 2, **dadurch gekennzeichnet, dass** die Pseudonymisierung der Verknüpfungsdaten (L) durch den Datenadministrator (DA) durchgeführt wird, der die pseudonymisierten Verknüpfungsdaten (L') und die entsprechenden Ist-Daten (S) an die Vorrichtung (CS) sendet (D2).

5. Verfahren nach Anspruch 1, **dadurch gekennzeichnet, dass** die Vorrichtung (CS) nach dem Speichern der Daten in den öffentlichen, dauerhaft unveränderbaren, verteilten und dezentralen Speicher (DDB) alle empfangenen Daten aus ihrem permanenten Speicher löscht, mit der Ausnahme der Verknüpfungsdaten (L) und Kontaktdaten des Besitzers (O), was eine nachfolgende Kontaktierung des Besitzers (O) ermöglicht, um eine Erlaubnis zum Inspizieren zu erhalten.

6. Verfahren nach Anspruch 1, **dadurch gekennzeichnet, dass** eine Antwort zum Senden der Anfrage (R11) für die Ist-Daten (S), die zum Eigentümer gehören und/oder eine Antwort zum Senden der Anfrage (R12) von der Vorrichtung (CS) an das elektronische Gerät (D) des Besitzers (O), um die Erlaubnis zum Inspizieren der Ist-Daten (S) des Besitzers (O) zu erhalten, zeitlich begrenzt wird, wobei durch die Entität (EA) eine maximal erlaubte Wartezeit (TEAmax) zum Inspizieren der Daten (S) definiert wird, und von einem Administrator der Vorrichtung (CS) eine maximal zulässige Wartezeit (Tcsmax) zum Erhalt der Antwort des Besitzers (O) der Ist-Daten (S) für die Steuerung über die Inspektionsanfrage bestimmt wird.

7. Vorrichtung (CS) zur Speicherung von Daten in einem öffentlichen, dauerhaft unveränderlichen, verteilten und dezentralen Speicher (DDB) und zur Steuerung jeder Inspektionsanfrage und Datengewinnung aus einem öffentlichen, dauerhaft unveränderlichen, verteilten und dezentralen Speicher (DDB), wobei die Vorrichtung mit einem Netzwerk verbunden ist und mindestens eine zentrale Verarbeitungseinheit mit zugehöriger Schaltung zum Betrieb der zentralen Verarbeitungseinheit, eine Kommunikationseinheit zum Empfangen und Senden von elektronischen Nachrichten und zum Zugreifen, Lesen und Schreiben von Daten im öffentlichen, dauerhaft unveränderlichen, verteilten und dezentralen Speicher (DDB), einen Speicher zum Programmieren und Betreiben der Vorrichtung und zur lokalen Datenbank umfasst, wobei die zentrale Verarbeitungseinheit dazu eingerichtet ist, die folgenden Schritte durchzuführen:
- Empfangen (D1) der Verbindungsdaten (L), von geheimen Daten (C) und von entsprechenden Ist-Daten (S), und De-Identifikation (D11) eines Paares der Verknüpfungsdaten (L) und der entsprechenden Ist-Daten (S) zur Erzeugung der eindeutigen pseudonymisierten Verknüpfungsdaten (L');
- oder Empfangen (D2) der pseudonymisierten Verknüpfungsdaten (L) und der entsprechenden Ist-Daten (S);
- Eingeben (D3) der pseudonymisierten Verknüpfungsdaten (L') und der entsprechenden Ist-Daten (S), in den öffentlichen, dauerhaft unveränderbaren, verteilten und dezentralen Speicher (DDB);
- Empfangen einer Anfrage (R11) für die zum Besitzer (O) gehörenden Ist-Daten (S) zusammen mit den Verknüpfungsdaten (L) und Speicherung der Anfrage im permanenten Speicher;
- basierend auf den empfangenen Verknüpfungsdaten (L), Senden einer Anfrage (R12) an ein elektronisches Gerät (D) des Datenbesitzers (O), um eine Erlaubnis zum Inspizieren der Ist-Daten (S) des Besitzers (O) zu erhalten;
- Empfangen einer Genehmigung (R14) vom Besitzer (O) zum Inspizieren der Ist-Daten (S) des Besitzers (O), wobei die geheimen Daten (C) mit der Genehmigung gesendet werden;
- Re-Identifikation (R15) des Paares der Verknüpfungsdaten (L) und der entsprechenden Ist-Daten (S), basierend auf den empfangenen Verknüpfungsdaten (L) und den empfangenen geheimen Daten (C), wobei die Re-Identifikation (R15) die Erzeugung der pseudonymisierten Verknüpfungsdaten (L') aus den empfangenen Verknüpfungsdaten (L) und den empfangenen Geheimdaten (C) umfasst, wobei die pseudonymisierten Verknüpfungsdaten (L') in gleicher Weise wie im vorhergehenden De-Identifikationsschritt (D11) erzeugt werden, falls der vorhergehende De-Identifikationsschritt (D11) durchgeführ worden ist, und Abrufen der Ist-Daten (S) des Besitzers (O) aus dem öffentlichen, dauerhaft unveränderlichen, verteilten und dezentralen Speicher (DDB) basierend auf den pseudonymisierten Verknüpfungsdaten (L');
- Senden (R16) der Ist-Daten (S) des Besitzers (O) an die Entität (EA),
wobei die Verknüpfungsdaten (L) die persönlichen Angaben umfassen und einen Besitzer (O) sowie eine Verbindung zwischen dem Besitzer (O) und den Ist-Daten (S) eindeutig definieren,
wobei die geheimen Daten (C) den Standards der Komplexität und Entropie kryptographischer Schlüssel entsprechen,
wobei die Pseudonymisierung der Verknüpfungsdaten (L), um die pseudonymisierten Verknüpfungsdaten (L') zu erhalten, durch eine symmetrische kryptographische Verschlüsselungsfunktion durchgeführt wird, wobei die zu verschlüsselnden Daten ein Hash (H(L)) der von einer Einweg-kryptographischen Hash-Funktion erzeugten Verknüpfungsdaten (L) sind und ein Schlüssel der symmetrischen kryptographischen Verschlüsselungsfunktion ein Hash (H(C)) der von einer Einweg-kryptographischen Hash-Funktion erzeugten Geheimdaten (C) ist, und
wobei, nach dem Speichern der Daten in den öffentlichen, dauerhaft unveränderbaren, verteilten und dezentralen Speicher (DDB), alle empfangenen Daten aus ihrem permanenten Speicher durch die Vorrichtung gelöscht werden, wobei die Kontaktierung des Besitzers (O) zum Erhalt der Erlaubnis über eine dedizierte Applikation basierend auf den empfangenen Verknüpfungsdaten (L) erfolgt, wobei die Applikation auf dem persönlichen Gerät (D) des Besitzers (O) installiert und mit einer dedizierten Informations-Telekommunikationslösung innerhalb der Vorrichtung (CS) verbunden ist.

8. Vorrichtung nach Anspruch 7, **dadurch gekennzeichnet, dass** die Pseudonymisierung der Verknüpfungsdaten (L), um die pseudonymisierten Verknüpfungsdaten (L') zu erhalten, durch eine symmetrische kryptographische Verschlüsselungsfunktion durchgeführt wird, wobei die zu verschlüsselnden Daten ein Hash (H(L)) der von einer Einweg-kryptographischen Hash-Funktion erzeugten Verknüpfungsdaten (L) sind und ein Schlüssel der symmetrischen kryptographischen Verschlüsselungsfunktion die Geheimdaten (C) sind.

9. Vorrichtung nach Ansprüchen 7 bis 8, **dadurch gekennzeichnet, dass** nach dem Speichern der Daten in den öffentlichen, dauerhaft unveränderbaren, verteilten und dezentralen Speicher (DDB), alle empfangenen Daten aus ihrem permanenten Speicher durch die Vorrichtung gelöscht werden, mit der Ausnahme der Verknüpfungsdaten (L) und Kontaktdaten des Besitzers (O), was eine nachfolgende Kontaktierung des Besitzers (O) ermöglicht, um eine Erlaubnis zum Inspizieren zu erhalten.

## Revendications

1. Procédé de stockage de données dans un stockage public, irrémédiablement immuable, distribué et décentralisé (DDB) et de contrôle de chaque demande d'inspection et récupération de données à partir d'un stockage public, irrémédiablement immuable, distribué et décentralisé (DDB), **caractérisé en ce qu'**il comprend une première phase et une seconde phase, la première phase comprenant les étapes suivantes:
- définition des données de liaison (L), qui comprennent des données personnelles et définissent un propriétaire (O) et une liaison entre le propriétaire (O) et une donnée réelle (S) sans ambiguïté, moyennant quoi les données de liaison (L) sont déterminées par un administrateur de données (DA) indépendamment, ou en accord avec une entité (EA) ;
- définition d'une donnée secrète (C) conforme aux normes de complexité et d'entropie de clés cryptographiques, les données secrètes (C) étant spécifiées par l'administrateur de données (DA) ou le propriétaire de données (O) et les données secrètes (C) étant conservées en sécurité par le propriétaire de données (O) ou par l'administrateur de données (DA) ;
- définition des données réelles (S) ;
- désidentification (D11) d'une paire des données de liaison (L) et des données réelles correspondantes (S) pour générer des données de liaison pseudonymisées uniques (L'), la pseudonymisation des données de liaison (L) étant effectuée par le dispositif (CS) ou l'administrateur de données (DA) ;
- entrée (D3) de la paire de données désidentifiées, à savoir les données de liaison pseudonymisées (L') et les données réelles correspondantes (S), dans le stockage public, permanent irrémédiablement immuable, distribué et décentralisé (DDB) par le dispositif (CS) ;
et la seconde phase comprenant les étapes suivantes :
- envoi d'une demande (R11) pour les données réelles (S) appartenant au propriétaire (O) par l'entité (EA) au dispositif (CS), les données de liaison (L) étant envoyées dans la demande (R11) et stockage de la demande dans une mémoire permanente ou temporaire du dispositif (CS) ;
- sur la base des données de liaison reçues (L), l'envoi d'une demande (R12) du dispositif (CS) à un dispositif électronique (D) du propriétaire de données (O) pour acquérir la permission d'inspecter les données réelles (S) du propriétaire (O) ;
- approbation de l'inspection (R13) par le propriétaire (O) en entrant les données secrètes (C) dans le dispositif électronique (D), dans un temps d'attente autorisé maximal défini ;
- envoi de l'approbation (R14) au dispositif (CS), les données secrètes (C) étant envoyées avec l'approbation ;
- ré-identification (R15) de la paire de données de liaison (L) et des données réelles correspondantes (S), sur la base des données de liaison reçues (L) et des données secrètes reçues (C), la ré-identification (R15) comprenant la génération des données de liaison pseudonymisées (L') à partir des données de liaison reçues (L) et des données secrètes reçues (C) de la même manière que dans l'étape de dés-identification précédente (D11), et l'obtention des données réelles (S) du propriétaire (O) à partir du stockage publique, irrémédiablement immuable et décentralisée (DDB) sur la base des données de liaison pseudonymisées (L'), par le dispositif (CS) ;
- envoi (R16) des données réelles (S) du propriétaire (O) à l'entité (EA) par le dispositif (CS) la première phase pouvant être effectuée un nombre facultatif de fois, et la seconde phase pouvant être effectuée un nombre facultatif de fois après au moins une exécution de la première phase,
la pseudonymisation des données de liaison (L), afin d'obtenir les données de liaison pseudonymisées (L'), étant réalisée par une fonction de chiffrement cryptographique symétrique, les données à chiffrer étant un hachage (H(L)) des données de liaison (L) générées par une fonction de hachage cryptographique unidirectionnelle, et une clé de la fonction de chiffrement cryptographique symétrique étant un hachage (H(C)) des données secrètes (C) générées par une fonction de hachage cryptographique unidirectionnelle, et
le dispositif (CS), une fois que les données ont été stockées dans le stockage public, irrémédiablement immuable, distribué et décentralisée (DDB), supprime toutes les données reçues de sa mémoire permanente, la prise de contact avec le propriétaire (O) pour obtenir la permission d'inspection étant effectuée par l'intermédiaire d'une application dédiée sur la base des données de liaison reçues (L), l'application étant installée sur le dispositif électronique personnel (D) du propriétaire (O) et connectée à une solution de télécommunication d'informations dédiée dans le dispositif (CS).

2. Procédé selon la revendication 1, **caractérisé en ce que** la pseudonymisation des données de liaison (L), afin d'obtenir les données de liaison pseudonymisées (L'), est réalisée par une fonction de chiffrement cryptographique symétrique, les données à chiffrer étant un hachage (H(L)) des données de liaison (L) générées par une fonction de hachage cryptographique unidirectionnelle, et une clé de la fonction de chiffrement cryptographique symétrique étant les données secrètes (C).

3. Procédé selon les revendications 1 à 2, **caractérisé en ce que** la pseudonymisation des données de liaison (L) est réalisée par le dispositif (CS) après l'envoi (D1) des données de liaison (L), des données secrètes (C) et des données réelles correspondantes (S), par l'administrateur de données (DA).

4. Procédé selon les revendications 1 à 2, **caractérisé en ce que** la pseudonymisation des données de liaison (L) est réalisée par l'administrateur de données (DA) qui envoie (D2) des données pseudonymisées de liaison (L') et des données réelles correspondantes (S) au dispositif (CS).

5. Procédé selon la revendication 1, **caractérisé en ce que** le dispositif (CS), une fois que les données ont été stockées dans le stockage public, irrémédiablement immuable, distribué et décentralisée (DDB), supprime toutes les données reçues de sa mémoire permanente, à l'exception des données de liaison (L) et des données de contact correspondantes du propriétaire (O), ce qui permet de contacter ultérieurement le propriétaire (O) pour obtenir la permission d'inspecter.

6. Procédé selon la revendication 1, **caractérisé en ce qu'**une réponse pour envoyer la demande (R11) pour des données réelles (S) appartenant au propriétaire (O) et/ou une réponse pour envoyer la demande (R12) du dispositif (CS) au dispositif électronique (D) du propriétaire (O) pour obtenir la permission d'inspecter les données réelles (S) du propriétaire (O), est limité dans le temps, un temps d'attente autorisé maximal (TEAmax) pour inspecter les données (S) étant défini par l'entité (EA), et un temps d'attente autorisé maximal (TCSmax) pour obtenir la réponse du propriétaire (O) des données réelles (S) pour le contrôle sur la demande d'inspection étant déterminé par un administrateur du dispositif (CS).

7. Dispositif (CS) de stockage de données dans un stockage public, irrémédiablement immuable, distribué et décentralisé (DDB) et de contrôle de chaque demande d'inspection et récupération de données à partir d'un stockage public, irrémédiablement immuable, distribué et décentralisé (DDB), le dispositif étant connecté à un réseau et comprenant au moins une unité centrale de traitement avec un circuit associé pour le fonctionnement de l'unité centrale de traitement, une unité de communication pour recevoir et envoyer des messages électroniques, et accéder, lire et écrire des données dans le stockage public, irrémédiablement immuable, distribué et décentralisé (DDB), une mémoire nécessaire à la programmation et au fonctionnement du dispositif et pour une base de données locale, l'unité centrale de traitement étant conçue pour effectuer les étapes suivantes :
- réception (D1) d'une donnée de liaison (L), d'une donnée secrète (C) et d'une donnée réelle (S) correspondante, et désidentification (D11) d'une paire des données de liaison (L) et des données réelles correspondantes (S) pour générer des données de liaison pseudonymisées uniques (L') ;
- ou réception (D2) des données de liaison pseudonomysées (L) et des données réelles correspondantes (S) ;
- entrée (D3) des données de liaison pseudonymisées (L') et des données réelles correspondantes (S), dans le stockage public, irrémédiablement immuable, distribué et décentralisé (DDB) ;
- réception d'une demande (R11)pour des données réelles (S) appartenant au propriétaire (O), ensemble avec des données de liaison (L) et stockage de la demande dans la mémoire permanente ;
- sur la base des données de liaison reçues (L), l'envoi d'une demande (R12) à un dispositif électronique (D) du propriétaire de données (O) pour acquérir la permission d'inspecter les données réelles (S) du propriétaire (O) ;
- réception de l'approbation (R14) du propriétaire (O) pour inspecter des données réelles (S) du propriétaire (O), les données secrètes (C) étant envoyées avec l'approbation ;
- ré-identification (R15) de la paire de données de liaison (L) et des données réelles correspondantes (S), sur la base des données de liaison reçues (L) et des données secrètes reçues (C), la ré-identification (R15) comprenant la génération des données de liaison pseudonymisées (L') à partir des données de liaison reçues (L) et des données secrètes reçues (C), les données de liaison pseudonymisées (L') étant générées de la même manière que dans l'étape précédente de désidentification (D11), si l'étape précédente de désidentification (D11) a été réalisé, et l'obtention des données réelles (S) du propriétaire (O) à partir du stockage publique, irrémédiablement immuable, distribuée et décentralisée (DDB) sur la base des données de liaison pseudonymisées (L') ;
- envoi (R16) des données réelles (S) du propriétaire (O) à l'entité (EA),
les données de liaison (L) comprenant des données personnelles et définissent un propriétaire (O) et une liaison entre le propriétaire (O) et des données réelles (S) sans ambiguïté,
les données secrètes (C) étant conformes aux normes de complexité et d'entropie de clés cryptographiques,
la pseudonymisation des données de liaison (L), afin d'obtenir les données de liaison pseudonymisées (L'), étant réalisée par une fonction de chiffrement cryptographique symétrique, les données à chiffrer étant un hachage (H(L)) des données de liaison (L) générées par une fonction de hachage cryptographique unidirectionnelle, et une clé de la fonction de chiffrement cryptographique symétrique étant un hachage (H(C)) des données secrètes (C) générées par une fonction de hachage cryptographique unidirectionnelle, et
une fois que les données ont été stockées dans le stockage public, irrémédiablement immuable, distribué et décentralisée (DDB), ledit dispositif supprime toutes les données reçues de sa mémoire permanente, la prise de contact avec le propriétaire (O) pour obtenir la permission d'inspection étant effectuée par l'intermédiaire d'une application dédiée sur la base des données de liaison reçues (L), l'application étant installée sur le dispositif personnel (D) du propriétaire (O) et connectée à une solution de télécommunication d'informations dédiée dans le dispositif (CS).

8. Dispositif selon la revendication 7, **caractérisé en ce que** la pseudonymisation des données de liaison (L), afin d'obtenir les données de liaison pseudonymisées (L'), est réalisée par une fonction de chiffrement cryptographique symétrique, les données à chiffrer étant un hachage (H(L)) des données de liaison (L) générées par une fonction de hachage cryptographique unidirectionnelle, et une clé de la fonction de chiffrement cryptographique symétrique étant les données secrètes (C).

9. Dispositif selon les revendications 7 à 8, **caractérisé en ce que**, une fois que les données ont été stockées dans le stockage public, irrémédiablement immuable, distribué et décentralisée (DDB), ledit dispositif supprime toutes les données reçues de sa mémoire permanente, à l'exception des données de liaison (L) et des données de contact correspondantes du propriétaire (O), ce qui permet de contacter ultérieurement le propriétaire (O) pour obtenir la permission d'inspecter.
